# EUROPEAN PATENT APPLICATION

(11) **EP 4 756 184 A1**
(43) Date of publication of application: **10.06.2026**
(21) Application number: 25220577.8
(22) Date of filing: 03.12.2025
(51) Int. Cl.: F01D 11/24, F02C 6/08, F02C 9/18

(54) **GAS TURBINE ENGINE WITH ADAPTIVE TURBINE COOLING AIR SYSTEM AND METHOD**

(30) Priority: 03.12.2024 US 202418966996
(71) Applicant: RTX Corporation, Farmington, CT 06032 (US)
(72) Inventor: CLARK, Thomas E., Wells, 04090 (US); YAZICI, Murat, Glastonbury, 06033 (US)
(74) Representative: Dehns

(57) **Abstract**

A gas turbine engine (20) includes compressor (30) and turbine (34) sections, and a turbine cooling air (TCA) system (54). The turbine section (34) has upstream (44A) and downstream (44B) rotor stages, and turbine sub-sections (47A,47B). The TCA system (54) includes a flow mixing device (70) and a compressor bleed air flow valve (72), and is configured to receive first and second compressor bleed air flows. The compressor bleed air flow valve (72) may be in an open or a closed configuration. The TCA system (54) operates in a first or a second mode. In the first mode, the compressor bleed air flow valve (72) is closed and a conditioned air flow is from the first compressor bleed air flow. In the second mode, the compressor bleed air flow valve (72) is open and the conditioned air flow is a mixture of the first and second compressor bleed air flows. The conditioned air flow is directed to the downstream turbine subsection (47B).

## Description

### BACKGROUND OF THE INVENTION

### 1. Technical Field

The present disclosure relates gas turbine engines in general and to turbine cooling air systems and methods in particular.

### 2. Background Information

Aircraft gas turbine engines are often configured to have a turbine air system which is sized to high thrust engine conditions. The air system is often configured with fixed compressor bleed and fixed turbine bleed port locations. Engine efficiency is affected by compressor bleed stage selection and associated bleed pressure. It would be useful to provide a system and method for actively controlling turbine cooling air bleed pressure and compressor bleed source selection.

### SUMMARY

According to one aspect of the present invention, a gas turbine engine is provided that includes a compressor section, a turbine section, and a turbine cooling air system. The turbine section has an upstream rotor stage, a downstream rotor stage, an upstream turbine sub-section, and a downstream turbine sub-section. The turbine cooling air system includes a flow mixing device and a compressor bleed air flow valve. The turbine cooling air system is configured to receive a first compressor bleed air flow from a first compressor bleed port stage location engaged with the compressor section and receive a second compressor bleed air flow from a second compressor bleed port stage location engaged with the compressor section. The first compressor bleed port is disposed upstream of the second compressor bleed port. The compressor bleed air flow valve is in fluid communication with the second compressor bleed port and is controllable to be in an open configuration or a closed configuration. The turbine cooling air system is configured operate in a first mode or a second mode. In the first mode, the compressor bleed air flow valve is in the closed configuration and a conditioned air flow produced by the flow mixing device is solely from the first compressor bleed air flow. In the second mode, the compressor bleed air flow valve is in the open configuration and the conditioned air flow produced by the flow mixing device is a mixture of the first compressor bleed air flow and the second compressor bleed air flow. The turbine cooling air system is configured to direct the conditioned air flow to the downstream turbine sub-section.

Optionally, and in accordance with the above, the second compressor bleed port may be in fluid communication with the upstream turbine sub-section and the turbine cooling air system may be configured to provide second compressor bleed air flow to the upstream turbine sub-section.

Optionally, and in accordance with any of the above, the open configuration of the compressor bleed air flow valve may include a fully open configuration with a maximum volumetric flow rate of the second compressor bleed air flow through the compressor bleed air valve, and a plurality of partially open valve configurations. Each partially open valve configuration has a volumetric flow rate that is less than the maximum volumetric flow rate.

Optionally, and in accordance with any of the above, the turbine section may be a high pressure turbine section and the engine may further include a low pressure turbine section, and the compressor section may be a high pressure compressor section and the engine may further include a low pressure compressor section.

Optionally, and in accordance with any of the above, the flow mixing device may include a hollow outer body and an inner body. The hollow outer body may include an interior cavity that extends between an inlet end of the hollow outer body and a discharge end of the hollow body. The inner body may be disposed within the interior cavity of the hollow outer body and an annular region may be formed between the inner body and the hollow outer body.

Optionally, and in accordance with any of the above, the inner body may include an axially extending interior passage, and a downstream discharge end of the interior passage may be configured as a venturi.

Optionally, and in accordance with any of the above, the flow mixing device may be configured to receive the first compressor bleed air flow in the annular region between the inner body and the hollow outer body.

Optionally, and in accordance with any of the above, the flow mixing device may be configured to receive the second compressor bleed air flow at an inlet end of the inner body.

Optionally, and in accordance with any of the above, the turbine cooling air system may be configured to receive a third compressor bleed air flow from a third compressor bleed port engaged with the compressor section, wherein the third compressor bleed port may be disposed downstream of the second compressor bleed port and the first compressor bleed port, and the turbine cooling air system may be configured to provide third compressor bleed air flow to the upstream turbine sub-section.

According to another aspect of the present invention, a method of providing cooling air flow to a turbine section within a gas turbine engine is provided. The gas turbine engine includes a compressor section and a turbine section. The turbine includes an upstream rotor stage, a downstream rotor stage, an upstream turbine sub-section, and a downstream turbine sub-section. The upstream rotor stage and the downstream rotor stage each include a plurality of rotor blades. Each rotor blade has a rotor blade tip. The upstream turbine sub-section is disposed upstream of the downstream turbine sub-section. The method includes: providing a first compressor bleed air flow from a first compressor bleed port engaged with the compressor section to a flow mixing device; selectively providing a second compressor bleed air flow from a second compressor bleed port engaged with the compressor section to the flow mixing device, wherein the first compressor bleed port is disposed upstream of the second compressor bleed port; producing a conditioned cooling air flow using the flow mixing device in a first mode or a second mode, wherein in the first mode the conditioned air flow is produced solely from the first compressor bleed air flow, and in the second mode the conditioned cooling air flow is a mixture of the first compressor bleed air flow and the second compressor bleed air flow; and providing the conditioned cooling air flow to the downstream turbine sub-section.

Optionally, and in accordance with any of the above, the method may include the second compressor bleed air flow to the upstream turbine sub-section.

Optionally, and in accordance with any of the above, the first compressor bleed air flow may be provided at a first pressure level, and the second compressor bleed air flow may be provided at a second pressure level, and the conditioned cooling air flow may be produced at a third pressure level, wherein the second pressure level is greater than the first pressure level and the third pressure level, and the third pressure level is greater than the first pressure level.

Optionally, and in accordance with any of the above, the method may include providing a third compressor bleed air flow from a third compressor bleed port engaged with the compressor section, wherein the third compressor bleed port is disposed downstream of the second compressor bleed port and the first compressor bleed port, and providing the third compressor bleed air flow to the upstream turbine sub-section.

The foregoing features and elements may be combined in various combinations without exclusivity, unless expressly indicated otherwise. For example, aspects and/or embodiments of the present disclosure may include any one or more of the individual features or elements disclosed above and/or below alone or in any combination thereof. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

FIG. 1 is a diagrammatic sectional view of a gas turbine engine embodiment.
FIG. 2 is a diagrammatic partial illustration of a turbine section embodiment.
FIG. 3 is a diagrammatic sectional view of a gas turbine engine according to an embodiment of the present disclosure.
FIG. 4 is a diagrammatic view of a present disclosure flow mixing device embodiment.
FIG. 5 is a diagrammatic sectional view of a gas turbine engine according to an embodiment of the present disclosure.
FIG. 6 is a diagrammatic view of a present disclosure flow mixing device embodiment.

### DETAILED DESCRIPTION

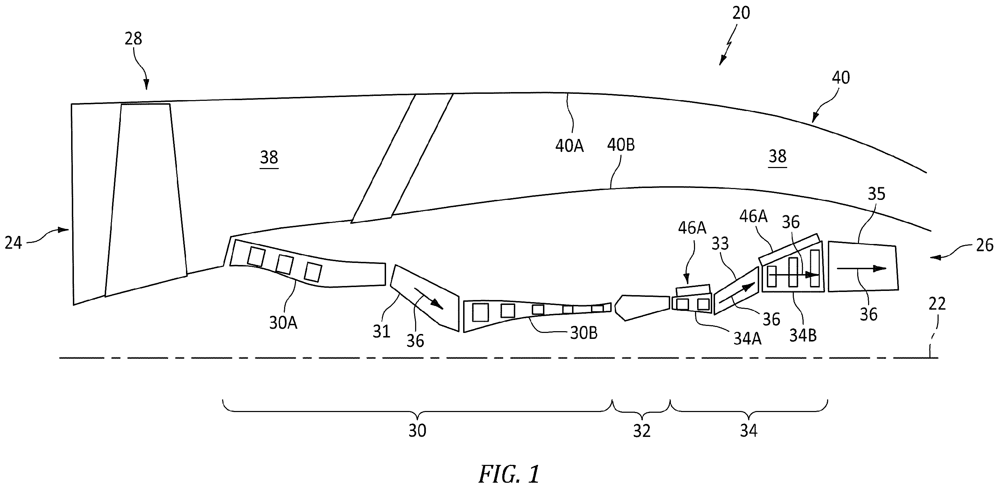

FIG. 1 shows a diagrammatic view of a gas turbine engine 20. The gas turbine engine 20 extends along an axial centerline 22 between an upstream airflow inlet 24 and a downstream exhaust 26. The gas turbine engine 20 includes a fan section 28, a compressor section 30, a combustion section 32, and a turbine section 34. The compressor section 30 includes a low-pressure compressor (LPC 30A) and a high-pressure compressor (HPC 30B). The turbine section 34 includes a high-pressure turbine (HPT 34A) and a low-pressure turbine (LPT 34B). The engine sections are arranged sequentially along the centerline 22 within an engine housing. The LPC 30A is connected to and driven by the LPT 34B through a low-speed shaft (not shown). The HPC 30B is connected to and driven by the HPT 34A through a high-speed shaft (not shown).

Air entering the gas turbine engine 20 through the airflow inlet 24 (forward of the fan section 28) is bisected between a core gas path 36 and a bypass air path 38. A portion of the air entering the gas turbine engine 20 passes through the fan section 28 and enters the core gas path 36. The core gas path 36 extends through the LPC 30A, the intermediate case 31, the HPC 30B, the combustion section 32, the HPT 34A, the mid-turbine frame 33, the LPT 34B, and the turbine exhaust case 35. Core gas exiting the LPT 34B exits the engine 20 via the exhaust 26. The remainder of the air entering the gas turbine engine 20 passes through the fan section 28 and enters the bypass air path 38 which is disposed radially outside of the core of the engine 20. The gas turbine engine 20 is diagrammatically shown in FIG. 1 engaged with a nacelle structure 40. The nacelle structure 40 is configured to provide an annular region radially outside of the core of the gas turbine engine 20. The annular region (which serves as the bypass air path 38) is defined by an outer radial structure 40A and an inner radial structure 40B. The outer radial structure 40A defines the outer radial boundary of the bypass air path 38 and the inner radial structure 40B defines the inner radial boundary of the bypass air path 38.

The gas turbine engine 20 configuration diagrammatically shown in FIG. 1 is an example provided to facilitate the description herein. The present disclosure may be implemented in a variety of different gas turbine engine configurations and is not therefore limited to the gas turbine engine 20 configuration diagrammatically shown in FIG. 1. For example, in some gas turbine engine configurations the fan section 28 may be connected to a geared architecture (not shown) through a fan shaft. In addition, the nacelle structure diagrammatically shown in FIG. 1 is provided to facilitate the description herein and the present disclosure is not limited to this nacelle structure example.

The terms "forward", "leading", "aft, "trailing" are used herein to indicate the relative position of a component or surface. As air passes through the engine 20, a leading edge of a stator vane or rotor blade encounters the air before the trailing edge of the same. In the direction of airflow within the core gas path of the engine, core gas will encounter a "forward" or "upstream" first component before it encounters an "aft" or "downstream" second component. In a conventional axial engine such as that shown in FIG. 1, for example, the fan section is "forward" or "upstream" of the compressor section and the turbine section is "aft" or "downstream" of the compressor section. The terms "inner radial" and "outer radial" refer to relative radial positions from the engine centerline. An inner radial component or path is disposed radially closer to the engine centerline than an outer radial component or path.

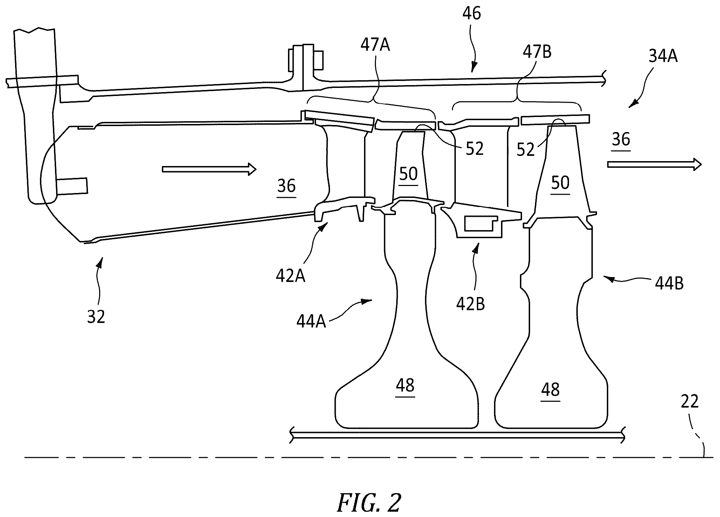

FIG. 2 diagrammatically illustrates an HPT 34A section downstream of the combustion section 32. The HPT 34A section includes a first stage turbine vane 42A, a first stage turbine rotor 44A (i.e., the upstream or forward turbine rotor), a second stage turbine vane 42B, and a second stage turbine rotor 44B (i.e., the downstream or aft turbine rotor). The first stage turbine vane 42A is disposed between the combustion section 32 and the first stage turbine rotor 44A. The second stage turbine vane 42B is disposed between the first stage turbine rotor 44A and the second stage turbine rotor 44B. A turbine case 46 is disposed radially outside of the first and second stage turbine vanes 42A, 42B and the first and second stage turbine rotors 44A, 44B. The first and second stage turbine rotors 44A, 44B each include a disk 48 rotatable about the axial engine centerline 22, with a plurality of rotor blades 50 that extend radially out from the disk 48 and into the core gas path 36. Each rotor blade 50 includes a blade tip 52 at the outer radial end of an airfoil portion of the rotor blade 50. The arrows shown in FIG. 2 illustrate the direction of core gas passing through the HPT 34A section along the core gas path 36.

The turbine case 46 includes structure (e.g., a blade outer air seal, support structures, and the like) disposed radially outside of each turbine rotor 44A, 44B. As will be detailed herein, embodiments of the present disclosure are configured to provide conditioned air to the HPT 34A section associated with the first stage turbine rotor 44A, or to the HPT 34A section associated with the second stage turbine rotor 44B, or both. The HPT 34A section associated with the first stage turbine rotor 44A may include the first stage turbine vane 42A, or the portion of the turbine case 46 radially outside of the first stage turbine rotor 44A, or a blade outer air seal disposed outside of the first stage turbine rotor 44A, or the like, or any combination thereof. The HPT 34A section associated with the second stage turbine rotor 44B may include the second stage turbine vane 42B, or the portion of the turbine case 46 radially outside of the second stage turbine rotor 44B, or a blade outer air seal disposed outside of the second stage turbine rotor 44B, or the like, or any combination thereof. To facilitate the description herein, the HPT 34A section associated with the first stage turbine rotor 44A will be referred to as the "upstream turbine sub-section 47A" and the HPT 34A section associated with the second stage turbine rotor 44B will be referred to as the "downstream turbine sub-section 47B". The HPT 34A section shown in FIG. 2 is provided herewith to diagrammatically illustrate an arrangement of turbine rotors and vanes within a turbine section 34. The present disclosure is not limited to any particular turbine section 34 configuration, and is not limited to providing conditioned air to the first stage turbine vane 42A, the first stage turbine rotor 44A (i.e., the upstream or forward turbine rotor), the second stage turbine vane 42B, the second stage turbine rotor 44B, and the turbine case 46 components associated therewith.

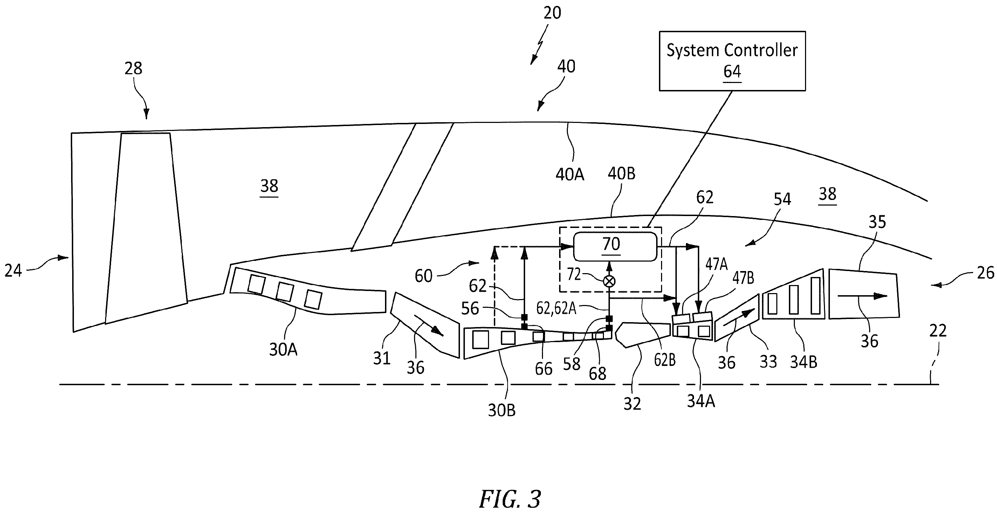

FIG. 3 diagrammatically illustrates an embodiment of a present disclosure turbine cooling air (TCA) system 54. The TCA system 54 includes an upstream compressor air bleed structure 56, a downstream compressor air bleed structure 58, and a bleed air mixing (BAM) system 60. As will be described herein, air conduits 62 (e.g., air passages formed by interior structural panels or tubes, or the like, or any combination thereof) provide fluid communication between the TCA system 54 components. In some embodiments, additional fluid flow components (e.g., valves, filters, and the like) may be included. In some embodiments, the TCA system 54 may include or be in communication with a system controller 64 for control of TCA system 54 components.

An upstream HPC bleed port 66 is configured to receive compressor bleed air from the HPC 30B. A downstream HPC bleed port 68 is configured to receive compressor bleed air from the HPC 30B. The upstream HPC bleed port 66 is engaged with the HPC 30B at a position that is located upstream of the downstream HPC bleed port 68. The present disclosure is not limited to any particular configuration for the upstream and/or downstream HPC bleed port 68. The upstream compressor bleed structure 56 is engaged with the upstream HPC bleed port 66. The downstream compressor bleed structure 58 is engaged with the downstream HPC bleed port 68. The present disclosure is not limited to any particular upstream and/or downstream compressor bleed structure 56, 58 configuration. In FIG. 3, the upstream HPC bleed port 66 is diagrammatically shown engaged with the HPC 30B between the second and third stages of the HPC 30B, and the downstream HPC bleed port 68 is diagrammatically shown engaged with the HPC 30B after the fifth stage of the HPC 30B (e.g., at the exit of the HPC 30B). The present disclosure is not limited to the upstream HPC bleed port 66 being engaged between the HPC 30B second and third stages, and is not limited to the downstream HPC bleed port 68 being engaged with the HPC 30B after the HPC 30B fifth stage. For example, FIG. 3 also diagrammatically shows via dashed lines an upstream HPC bleed port 66 engaged with the HPC 30B between the first and second stages of the HPC 30B. The present disclosure is not limited to the upstream HPC bleed port 66 or the downstream HPC bleed port 68 being engaged with particular stages (or between particular stages) within the HPC 30B other than the upstream HPC bleed port 66 being engaged with the HPC 30B at a position that is located upstream of the downstream HPC bleed port 68.

Core gas flow worked within the HPC 30B increases in pressure as it passes through each sequential HPC rotor stage. The present disclosure contemplates that the positions of the upstream and downstream HPC bleed ports 66, 68 within the HPC 30B may be chosen based on the magnitude of the compressor air pressure available at the respective HPC 30B positions, as well as other factors. In this manner, the present disclosure can be adapted to satisfy different TCA system 54 requirements.

The upstream compressor bleed structure 56 is in fluid communication with the BAM system 60 via a conduit 62; i.e., compressor bleed air passes through the upstream HPC bleed port 66, then into the upstream compressor bleed structure 56, and then into the conduit 62, and is delivered to the BAM system 60.

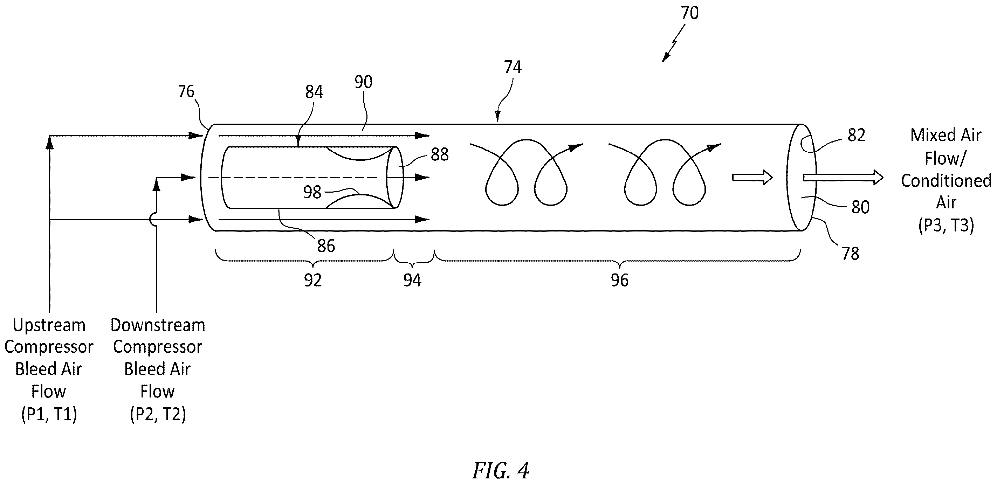

The BAM system 60 includes a flow mixing device 70 (e.g., see FIG. 4) and a downstream compressor bleed air (DCBA) flow valve 72. The flow mixing device 70 and the DCBA flow valve 72 may be integral with one another, or they may be configured as independent components. The flow mixing device 70 and the DCBA flow valve 72 are described herein (and shown in FIG. 3) as independent components to facilitate the description herein.

The DCBA flow valve 72 is controllable to be in an open configuration or a closed configuration. In an open configuration, compressor bleed air from the downstream HPC bleed port 68 is allowed to pass through the DCBA flow valve 72 to the flow mixing device 70. In the closed configuration, compressor bleed air from the downstream HPC bleed port 68 is precluded from passing through the DCBA flow valve 72 to the flow mixing device 70. In some embodiments, the DCBA flow valve 72 may be controlled to a plurality of open configurations to vary the volumetric flow rate of compressor bleed air from the downstream HPC bleed port 68 to the flow mixing device 70; i.e., controllable to be in a 25% open configuration, or a 50% open configuration, or a 75% open configuration, and so on. The present disclosure system may be configured such that the volumetric flow rate of the downstream HPC bleed port 68 is known at a given DCBA flow valve 72 configuration (e.g., 100% open, 75% open, 50% open, and so on) under given engine operational conditions; e.g., idle, take off, cruise, and so on. The DCBA flow valve 72 may be configured as a "fail-open" valve to ensure high pressure compressor bleed air is provided to the downstream case segment 46B.

In the present disclosure embodiment shown in FIG. 3, the DCBA flow valve 72 is disposed in line with a conduit 62A that extends from the downstream compressor bleed structure 58 to the flow mixing device 70. The portion of the conduit 62A that extends between the DCBA flow valve 72 and the downstream compressor bleed structure 58 is in fluid communication (via conduit 62B) with the upstream case segment 46A. Hence in this embodiment, compressor bleed air from the downstream HPC bleed port 68 may be provided unimpeded to the upstream case segment 46A.

FIG. 4 is a diagrammatic representation of a flow mixing device 70 that includes a hollow outer body 74 extending between an inlet end 76 and a discharge end 78. The hollow outer body 74 includes an interior cavity 80 that extends between the inlet end 76 and the discharge end 78. The interior cavity 80 is defined by an interior surface 82. The flow mixing device 70 further includes an inner body 84 that is disposed within the interior cavity 80 of the hollow outer body 74 at the inlet end 76. The inner body 84 has an axially extending exterior surface 86 and an interior passage 88 that extends axially between an upstream inlet end and a downstream discharge end; e.g., the hollow outer body 74 and the inner body 84 may be formed as concentric tubes. An annular region 90 is defined between the exterior surface 86 of the inner body 84 and the interior surface 82 of the hollow outer body interior cavity 80. The flow mixing device 70 may be described as having a first zone 92, a second zone 94, and a third zone 96. The first zone 92 extends from the inlet end 76 to the second zone 94; e.g., approximately the axial length of the inner body 84. The second zone 94 extends from the first zone 92 to the third zone 96, and the third zone 96 extends from the second zone 94 to the discharge end 78. The inner body 84 is disposed within the hollow outer body 74 within the first zone 92.

The flow mixing device 70 is configured to receive compressor bleed air flow ("upstream compressor bleed air flow") from the upstream HPC bleed port 66 within the annular region 90 between the inner body 84 and the hollow outer body 74 at a pressure and temperature (P1, T1). The flow mixing device 70 is also configured to receive compressor bleed air flow ("downstream compressor bleed air flow") from the downstream HPC bleed port 68 within the inner body 84 at a pressure and temperature (P2, T2). The downstream discharge end of the inner body interior passage 88 may be configured as a venturi 98. In the second zone 94 (immediately downstream of the inner body 84) and the third zone 96, the interior cavity 80 of the hollow outer body 74 allows mixing of upstream compressor bleed air flow (lower pressure) and the downstream compressor bleed air flow (higher pressure). In the second zone, the venturi 98 exit of the inner body interior passage 88 helps prevent flow reversal into the lower pressure annular region 90 (P2 > P1). The axial length of the third zone 96 is sufficient for the upstream and downstream compressor bleed air flows to adequately mix / normalize to a mixed flow pressure and temperature (P3, T3). The mixed flow may be referred to herein as "conditioned cooling air". The relative pressures and temperatures of the upstream compressor bleed air flow, the downstream compressor bleed air flow, and the mixed flow / conditioned flow are such that P1 < P3 < P2 and T1 < T3 < T2. The flow mixing device 70 diagrammatically illustrated in FIG. 4 and described above is an example of a flow mixing device 70 that may be used to mix an upstream compressor bleed air flow and a downstream compressor bleed air flow. The present disclosure is not limited to this example.

The term "system controller" as used herein refers to a device that may include any type of computing device, computational circuit, processor(s), CPU, computer, or the like capable of executing a series of instructions that are stored in memory. The instructions may include an operating system, and/or executable software modules such as program files, system data, buffers, drivers, utilities, and the like. The executable instructions may apply to any functionality described herein to enable the TCA system 54 (or a system component) to accomplish the same algorithmically and/or coordination of system components. The system controller 64 may include or may be in communication with one or more memory devices. The present disclosure is not limited to any particular type of memory device, and the memory device may store instructions and/or data in a non-transitory manner. Examples of memory devices that may be used include read-only memory, random access memory, volatile memory, non-volatile memory, static memory, dynamic memory, flash memory, cache memory, and/or any device that stores digital information. FIG. 3 diagrammatically illustrates the system controller 64 in communication with the BAM system 60

The system controller 64 is shown in the FIGURES and described herein as an independent component to facilitate the description. The system controller 64 may alternatively be integrated within another controller present with the gas turbine engine 20 (or aircraft) and that controller may be configured to perform the functionality detailed herein. The present disclosure is not limited to any particular controller architecture unless specifically stated herein.

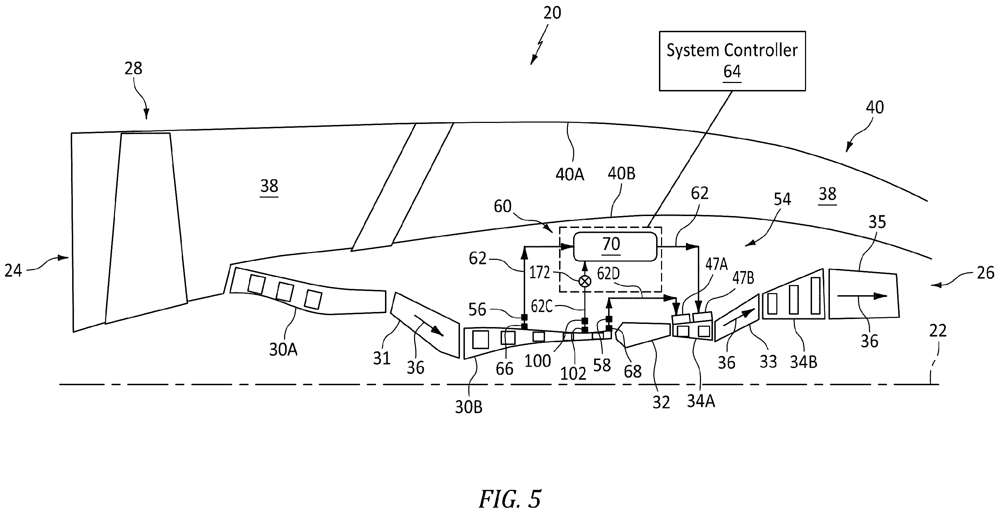

FIG. 5 diagrammatically illustrates another embodiment of a present disclosure TCA system 54. In this embodiment, the TCA system 54 includes an upstream compressor bleed structure 56, an intermediate compressor bleed structure 100, a downstream compressor air bleed structure 58, and a BAM system 60. As indicated herein, air conduits 62 provide fluid communication between the TCA system 54 components. In some embodiments, additional fluid flow components (e.g., valves, filters, and the like) may be included. In some embodiments, the TCA system 54 may include or be in communication with a system controller 64 for control of TCA system 54 components.

An upstream HPC bleed port 66 is configured to receive compressor bleed air from the HPC 30B. An intermediate HPC bleed port 102 is configured to receive compressor bleed air from the HPC 30B. A downstream HPC bleed port 68 is configured to receive compressor bleed air from the HPC 30B. The upstream HPC bleed port 66 is engaged with the HPC 30B at a position that is located upstream of the intermediate and downstream HPC bleed ports 102, 68. The present disclosure is not limited to any particular configuration for the upstream, intermediate, or downstream HPC bleed ports 66, 102, 68. The upstream compressor bleed structure 56 is engaged with the upstream HPC bleed port 66. The intermediate compressor air bleed structure 100 is engaged with the intermediate HPC bleed port 102. The downstream compressor air bleed structure 58 is engaged with the downstream HPC bleed port 68. The present disclosure is not limited to any particular upstream, intermediate, or downstream compressor bleed structure 56, 100, 58 configuration. In FIG. 5, the upstream HPC bleed port 66 is diagrammatically shown engaged with the HPC 30B between the second and third stages of the HPC 30B, the intermediate HPC bleed port 102 is diagrammatically shown engaged with the HPC 30B between the fourth and fifth stages of the HPC 30B, and the downstream HPC bleed port 68 is diagrammatically shown engaged with the HPC 30B after the fifth stage of the HPC 30B (e.g., at the exit of the HPC 30B). The present disclosure is not limited to the HPC bleed port positions diagrammatically shown in FIG. 5; e.g., one or more of the HPC bleed ports 66, 102, 68 may be shifted axially within the HPC 30B.

Core gas flow worked within the HPC 30B increases in pressure as it passes through each sequential HPC rotor stage. The present disclosure contemplates that the positions of the upstream, intermediate, and downstream HPC bleed ports 66, 102, 68 within the HPC 30B may be chosen based on the magnitude of the compressor air pressure available at the respective HPC 30B positions, as well as other factors. In this manner, the present disclosure can be adapted to satisfy different TCA system 54 requirements.

The upstream compressor bleed structure 56 is in fluid communication with the BAM system 60 via a conduit 62; i.e., compressor bleed air passes through the upstream HPC bleed port 66, then through the upstream compressor bleed structure 56, and then through the conduit 62 and is delivered to the BAM system 60.

Still referring to FIG. 5, the BAM system 60 includes a flow mixing device 70 (e.g., see FIG. 4) and an intermediate compressor bleed air (ICBA) flow valve 172. The flow mixing device 70 and the ICBA flow valve 172 may be integral with one another, or they may be configured as independent components. The flow mixing device 70 and the ICBA flow valve 172 are described herein (and shown in FIG. 5) as independent components to facilitate the description herein.

The ICBA flow valve 172 may be configured similar to the DCBA flow valve 72 described above; e.g., controllable to be in an open configuration or a closed configuration, including partially open configurations to vary the volumetric flow rate. In an open configuration, compressor bleed air from the intermediate HPC bleed port 102 passes through to the flow mixing device 70. In the closed configuration, compressor bleed air is precluded from passing through to the flow mixing device 70. The ICBA flow valve 172 may be configured as a "fail-open" valve to ensure high pressure compressor bleed air is provided to the downstream case segment 46B. In the TCA system 54 embodiment shown in FIG. 5, the ICBA flow valve 172 is disposed in line with a conduit 62C that extends from the intermediate compressor air bleed structure 100 to the flow mixing device 70. Also in the TCA system 54 embodiment shown in FIG. 5, the downstream HPT bleed 68 port is in fluid communication (via conduit 62D) with the upstream case segment 46A upstream turbine sub-section 47A of the HPT 34A. Hence in this embodiment, compressor bleed air from the downstream HPC bleed port 68 may be provided unimpeded to the upstream turbine sub-section 47A.

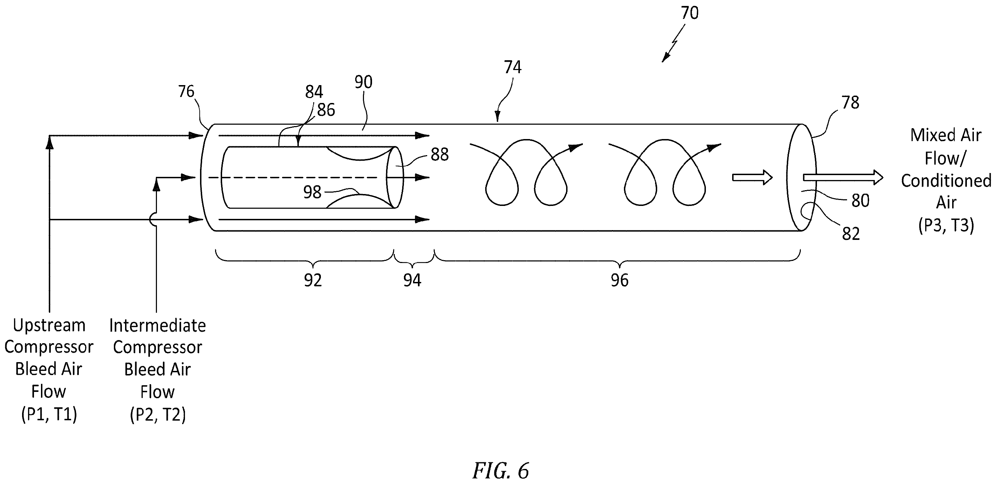

The flow mixing device 70 described herein and shown in FIG. 4 may be used in the TCA system 54 embodiment shown in FIG. 5. Referring to FIG. 6, in this TCA system 54 embodiment the flow mixing device 70 is configured to receive upstream compressor bleed air flow from the upstream HPC bleed port 66 (see FIG. 5) within the annular region 90 between the inner body 84 and the hollow outer body 74 at a pressure and temperature (P1, T1). The flow mixing device 70 is also configured to receive intermediate compressor bleed air flow from the intermediate HPC bleed port 102 (see FIG. 5) within the inner body 84 at a pressure and temperature (P2, T2), and produce mixing of the upstream and intermediate compressor bleed air flows in the third zone 96 that creates the conditioned air. The relative pressures and temperatures of the upstream compressor bleed air flow, the intermediate compressor bleed air flow, and the conditioned flow are such that P1 < P3 < P2 and T1 < T3 < T2.

The TCA system 54 embodiment shown in FIG. 5 may include a system controller 64 as detailed herein; e.g., in communication with the BAM system 60.

Both embodiments of the present disclosure TCA system 54 are selectively controllable (e.g., via the DCBA flow valve 72 in the FIG. 3 and the ICBA flow valve 172 in FIG. 5) to produce conditioned air solely from an upstream stage of the compressor (P1, T1 - which may be referred to as a TCA system 54 first mode of operation), or that is a mixture of compressor bleed air from an upstream stage and a downstream stage of the compressor (P2, T2 - which may be referred to as a TCA system 54 second mode of operation), thereby increasing the pressure of the conditioned air. Importantly, the present disclosure TCA system 54 is controllable such that the conditioned air flow can be adjusted to a desired pressure by varying the volumetric flow rate of the compressor bleed air through the DCBA flow valve 72 in the FIG. 3 embodiment, and the volumetric flow rate of the compressor bleed air through the ICBA flow valve 172 in the FIG. 5 embodiment. For example, increasing the volumetric flow rate of the compressor bleed air through the DCBA flow valve 72 in the FIG. 3 embodiment will increase the pressure and temperature (P3, T3) of the conditioned air that is provided to the downstream turbine sub-section 47B, and conversely decreasing the volumetric flow rate of the compressor bleed air through the DCBA flow valve 72 in the FIG. 3 embodiment will decrease the pressure and temperature (P3, T3) of the conditioned air that is provided to the downstream turbine sub-section 47B. In similar fashion, increasing the volumetric flow rate of the compressor bleed air through the ICBA flow valve 172 in the FIG. 5 embodiment will increase the pressure and temperature (P3, T3) of the conditioned air that is provided to the downstream turbine sub-section 47B, and conversely decreasing the volumetric flow rate of the compressor bleed air through the ICBA flow valve 172 in the FIG. 5 embodiment will decrease the pressure and temperature (P3, T3) of the conditioned air that is provided to the downstream turbine sub-section 47B. In this manner, the pressure and temperature of the conditioned air (P3, T3) can be adjusted to suit the engine operational status; e.g., idle, taxiing, take-off, cruise, and the like. The ability of the present disclosure TCA system 54 embodiments to tailor the conditioned air (P3, T3) to suit the engine operational status is understood to improve the tip clearance management, and thereby avoid both undesirable pinch scenarios (e.g., under full power transient operations) and to create steady-state tip clearances that increase the efficiency of the engine by decreasing tip clearance aerodynamic losses. The ability of the present disclosure TCA system 54 embodiments to tailor the conditioned air (P3, T3) to suit the engine operational status in real time is understood to provide significant benefit.

The control of the BAM system 60 may be based on compressor bleed air flow pressure and temperature parameters from particular compressor stages, ambient air pressure and/or temperature, or the like. These parameter values may be determined using appropriate sensors, or may be determined from other data, or may be acquired from data stored within a memory device (e.g., in communication with a system controller 64), or algorithmically determined, or any combination thereof.

While the principles of the disclosure have been described above in connection with specific apparatuses and methods, it is to be clearly understood that this description is made only by way of example and not as limitation on the scope of the disclosure. Specific details are given in the above description to provide a thorough understanding of the embodiments. However, it is understood that the embodiments may be practiced without these specific details.

It is noted that the embodiments may be described as a process which is depicted as a flowchart, a flow diagram, a block diagram, etc. Although any one of these structures may describe the operations as a sequential process, many of the operations can be performed in parallel or concurrently. In addition, the order of the operations may be rearranged. A process may correspond to a method, a function, a procedure, a subroutine, a subprogram, etc.

The singular forms "a," "an," and "the" refer to one or more than one, unless the context clearly dictates otherwise. For example, the term "comprising a specimen" includes single or plural specimens and is considered equivalent to the phrase "comprising at least one specimen." The term "or" refers to a single element of stated alternative elements or a combination of two or more elements unless the context clearly indicates otherwise. As used herein, "comprises" means "includes." Thus, "comprising A or B," means "including A or B, or A and B," without excluding additional elements.

It is noted that various connections are set forth between elements in the present description and drawings (the contents of which are included in this disclosure by way of reference). It is noted that these connections are general and, unless specified otherwise, may be direct or indirect and that this specification is not intended to be limiting in this respect. Any reference to attached, fixed, connected or the like may include permanent, removable, temporary, partial, full and/or any other possible attachment option.

As used herein, the terms "comprise", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

While various inventive aspects, concepts and features of the disclosures may be described and illustrated herein as embodied in combination in the exemplary embodiments, these various aspects, concepts, and features may be used in many alternative embodiments, either individually or in various combinations and sub-combinations thereof. Unless expressly excluded herein all such combinations and sub-combinations are intended to be within the scope of the present application. Still further, while various alternative embodiments as to the various aspects, concepts, and features of the disclosures--such as alternative materials, structures, configurations, methods, devices, and components, and so on--may be described herein, such descriptions are not intended to be a complete or exhaustive list of available alternative embodiments, whether presently known or later developed. Those skilled in the art may readily adopt one or more of the inventive aspects, concepts, or features into additional embodiments and uses within the scope of the present application even if such embodiments are not expressly disclosed herein. For example, in the exemplary embodiments described above within the Detailed Description portion of the present specification, elements may be described as individual units and shown as independent of one another to facilitate the description. In alternative embodiments, such elements may be configured as combined elements. It is further noted that various method or process steps for embodiments of the present disclosure are described herein. The description may present method and/or process steps as a particular sequence. However, to the extent that the method or process does not rely on the particular order of steps set forth herein, the method or process should not be limited to the particular sequence of steps described. As one of ordinary skill in the art would appreciate, other sequences of steps may be possible.

## Claims

1. A gas turbine engine (20), comprising:
a compressor section (30);
a turbine section (34) having an upstream rotor stage (44A), a downstream rotor stage (44B), an upstream turbine sub-section (47A), and a downstream turbine sub-section (47B);
a turbine cooling air system (54) that includes a flow mixing device (70) and a compressor bleed air flow valve (72), wherein the turbine cooling air system (54) is configured to receive a first compressor bleed air flow from a first compressor bleed port (66) stage location engaged with the compressor section (30) and receive a second compressor bleed air flow from a second compressor bleed port (68) stage location engaged with the compressor section (30), and the first compressor bleed port (66) is disposed upstream of the second compressor bleed port (68), wherein:
the compressor bleed air flow valve (72) is in fluid communication with the second compressor bleed port (68) and is controllable to be in an open configuration or a closed configuration;
the turbine cooling air system (54) is configured operate in a first mode or a second mode, wherein in the first mode the compressor bleed air flow valve (72) is in the closed configuration and a conditioned air flow produced by the flow mixing device (70) is solely from the first compressor bleed air flow, and in the second mode the compressor bleed air flow valve (72) is in the open configuration and the conditioned air flow produced by the flow mixing device (70) is a mixture of the first compressor bleed air flow and the second compressor bleed air flow; and
the turbine cooling air system (54) is configured to direct the conditioned air flow to the downstream turbine sub-section (47B).

2. The gas turbine engine (20) of claim 1, wherein the second compressor bleed port (68) is in fluid communication with the upstream turbine sub-section (47A) and the turbine cooling air system (54) is configured to provide second compressor bleed air flow to the upstream turbine sub-section (47A).

3. The gas turbine engine (20) of any preceding claim, wherein the open configuration of the compressor bleed air flow valve (72) includes a fully open configuration with a maximum volumetric flow rate of the second compressor bleed air flow through the compressor bleed air valve (72), and a plurality of partially open valve configurations, and each said partially open valve configuration has a volumetric flow rate that is less than the maximum volumetric flow rate.

4. The gas turbine engine (20) of any preceding claim, wherein the turbine section (34) is a high pressure turbine section (34A) and the engine (20) further includes a low pressure turbine section (34B).

5. The gas turbine engine (20) of any preceding claim, wherein the compressor section (30) is a high pressure compressor section (30A) and the engine (20) further includes a low pressure compressor section (30B).

6. The gas turbine engine (20) of any preceding claim, wherein the flow mixing device (70) includes a hollow outer body (74) and an inner body (84), the hollow outer body (74) includes an interior cavity (80) that extends between an inlet end (76) of the hollow outer body (74) and a discharge end (78) of the hollow outer body (74), the inner body (84) is disposed within the interior cavity (80) of the hollow outer body (74), and an annular region (90) is formed between the inner body (84) and the hollow outer body (74).

7. The gas turbine engine (20) of claim 6, wherein the inner body (84) includes an axially extending interior passage (88), and a downstream discharge end of the interior passage (88) is configured as a venturi (98).

8. The gas turbine engine (20) of claim 6 or 7, wherein the flow mixing device (70) is configured to receive the first compressor bleed air flow in the annular region (90) between the inner body (84) and the hollow outer body (74).

9. The gas turbine engine (20) of any of claims 6 to 8, wherein the flow mixing device (70) is configured to receive the second compressor bleed air flow at an inlet end (76) of the inner body (84).

10. The gas turbine engine (20) of any preceding claim, wherein the turbine cooling air system (54) is configured to receive a third compressor bleed air flow from a third compressor bleed port (68) engaged with the compressor section (30), the third compressor bleed port (68) is disposed downstream of the second compressor bleed port (102) and the first compressor bleed port (66), and the turbine cooling air system (54) is configured to provide third compressor bleed air flow to the upstream turbine sub-section (47A).

11. A method of providing cooling air flow to a turbine section (34) within a gas turbine engine (20) including a compressor section (30) and a turbine section (34), the turbine section (34) having an upstream rotor stage (44A), a downstream rotor stage (44B), an upstream turbine sub-section (47A), and a downstream turbine sub-section (47B), wherein both of the upstream rotor stage (44A) and the downstream rotor stage (44B) include a plurality of rotor blades (50), each rotor blade (50) having a rotor blade tip (52), and the upstream turbine sub-section (47A) is disposed upstream of the downstream turbine sub-section (47B), the method comprising:
providing a first compressor bleed air flow from a first compressor bleed port (66) engaged with the compressor section (30) to a flow mixing device (70);
selectively providing a second compressor bleed air flow from a second compressor bleed port (68) engaged with the compressor section (30) to the flow mixing device (70), wherein the first compressor bleed port (66) is disposed upstream of the second compressor bleed port (68);
producing a conditioned cooling air flow using the flow mixing device (70) in a first mode or a second mode, wherein in the first mode the conditioned air flow is produced solely from the first compressor bleed air flow, and in the second mode the conditioned cooling air flow is a mixture of the first compressor bleed air flow and the second compressor bleed air flow; and
providing the conditioned cooling air flow to the downstream turbine sub-section (47B).

12. The method of claim 11, further comprising providing the second compressor bleed air flow to the upstream turbine sub-section (47A).

13. The method of claim 11 or 12, wherein the turbine section (34) is a high pressure turbine section (34A) and the engine (20) further includes a low pressure turbine section (34B), the compressor section (30) is a high pressure compressor section (30A) and the engine (20) further includes a low pressure compressor section (30B).

14. The method of any of claims 11 to 13, wherein the first compressor bleed air flow is provided at a first pressure level, the second compressor bleed air flow is provided at a second pressure level, the conditioned cooling air flow is produced at a third pressure level, the second pressure level is greater than the first pressure level and the third pressure level, and the third pressure level is greater than the first pressure level.

15. The method of any of claims 11 to 14, further comprising providing a third compressor bleed air flow from a third compressor bleed port (68) engaged with the compressor section (30), wherein the third compressor bleed port (68) is disposed downstream of the second compressor bleed port (102) and the first compressor bleed port (66), and provides the third compressor bleed air flow to the upstream turbine sub-section (47A).
